# EUROPEAN PATENT SPECIFICATION

(11) **EP 2 877 555 B1**
(45) Date of publication and mention of the grant of the patent: **18.03.2020**
(21) Application number: 13823211.1
(22) Date of filing: 24.07.2013
(51) Int. Cl.: C10G 1/06, C10G 45/06, C10G 47/02, C10G 49/04, C10L 1/02, B01J 8/04, B01J 8/02, C10G 3/00, C10G 1/02, C10G 1/00

(54) **A METHOD OF HYDROTREATMENT**
VERFAHREN ZUR WASSERSTOFFBEHANDLUNG
PROCÉDÉ D'HYDROTRAITEMENT

(30) Priority: 25.07.2012 AU 2012903196
(43) Date of publication of application: 03.06.2015
(73) Proprietor: Curtin University Of Technology, Bentley, Western Australia 6102 (AU)
(72) Inventor: LI, Chun-Zhu, Bentley Western Australia 6102 (AU); GUNAWAN, Richard, Bentley Western Australia 6102 (AU); GHOLIZADEH, Mortaza, Bentley Western Australia 6102 (AU); CHAIWAT, Weerawut, Bentley Western Australia 6102 (AU)
(74) Representative: Regimbeau
(86) International application number: PCT/AU2013/000825
(87) International publication number: WO 2014/015380

(56) References cited:
- WO-A2-2010/049075
- WO-A2-2012/050662
- WO-A2-2012/082401
- GB-A- 2 462 054
- US-A- 4 347 122
- US-A- 4 795 841
- US-A1- 2009 163 744
- US-A1- 2010 043 279
- US-A1- 2010 228 062
- US-A1- 2011 119 994

## Description

### Field of the Invention

The present invention relates to a method of hydrotreatment.

### Background of the Invention

Biomass can be pyrolysed to form bio-crude, which can in turn be hydrotreated to form biofuel. However, the composition of bio-crude produced from pyrolysing biomass presents particular challenges when undergoing hydrotreatment.

In particular, bio-crude typically contains high concentrations of oxygen-containing functionalities making the bio-crude highly reactive, polar, acidic and corrosive. This can lead to the formation of coke on a catalyst's surface, including an internal surface of the catalyst, when bio-crude is hydrotreated, which in turn can deactivate the catalyst.

Further, bio-crude typically has a relatively high concentration of water, which can reduce the energy efficiency of hydrotreating the bio-crude. For example, under typical hydrotreatment conditions, water is likely to be in the gaseous state and therefore a large amount of energy is used in evaporating water from the bio-crude.

The patent application WO 2010/049075 and the patent US 4,795,841 disclose a hydrotreatment process wherein the feedstock stream is heated before it enters in the reactor and thus before contacting any catalyst.

### Summary of the Invention

The present invention relates to a method of hydrotreatment, the method comprising the steps of:
providing bio-crude from biomass pyrolysis that is suitable for undergoing hydrotreatment;
   mixing the bio-crude with a hydrogenation agent to form a feed stream comprising a mixture of the bio-crude and the hydrogenation agent; and
   heating the feed stream to break chemical bonds of the bio-crude in the presence of a hydrotreating catalyst, the feed stream being heated to at least a temperature at which the hydrotreating catalyst can provide activated hydrogen to react with the broken bonds within the bio-crude so as to minimise coke formed from the bio-crude,
characterised in that
   the feed stream is fed directly into a reaction region of a reactor, wherein the reaction region is at a temperature sufficient for the reaction between the bio-crude and the hydrogenation agent to occur in the presence of the hydrotreating catalyst to facilitate matching bond-breaking within the bio-crude with activated hydrogen provided by the hydrotreating catalyst; and
   prior to heating the feed stream in the presence of the hydrotreating catalyst, the feed stream is maintained below a predefined temperature, wherein the predefined temperature is 150°C.

Throughout this specification, the term 'hydrogenation agent' is used for hydrogen or any suitable compound that can provide hydrogen for hydrotreatment of the material.

The step of heating the feed stream typically comprises heating the feed stream to a temperature at which the catalyst has significant activity.

The feed stream is heated upon contact with the catalyst, the catalyst having been heated to at least the temperature at which the catalyst has significant activity.

The method comprises the step of, prior to heating the feed stream in the presence of the catalyst, maintaining the feed stream below a predefined temperature at which an amount of coke formed from the material would substantially reduce activity of the catalyst.

Heating the feed stream in the presence of the catalyst may provide the advantage of substantially minimising coke formed from the material prior to the material having access to activated hydrogen.

The predefined temperature depends on the material to be hydrotreated; this is 150°C for bio-crude (e.g. bio-oil) to be hydrotreated.

In one embodiment, the feed stream is maintained below the predefined temperature by mixing the hydrogenation agent with the material such that the feed stream has a linear velocity sufficient to reduce a residence time of the material in a first region, which may be at or above the predefined temperature, prior to contacting the catalyst in a second region. The first and second regions may be in a hydrotreating reactor.

Reducing the residence time of the material in the first region has the advantage of limiting the temperature of the material to below the predefined temperature prior to contacting the catalyst.

Further, or alternatively, the feed stream can be maintained below the predefined temperature by directing the feed stream directly into the second region. In one embodiment, the feed stream is directed through a passage that is provided with a feed stream outlet from which the feed stream can flow, the feed stream outlet being arranged at or adjacent the second region such that at least a portion of the feed stream flowing from the feed stream outlet flows directly into the second region.

Directing the feed stream directly into the second region can assist in preventing the material from being heated and undergoing reactions that result in coke formation prior to the feed stream contacting the catalyst. Preventing coke formation prior to the feed stream contacting the catalyst may assist in preventing coke formation on the catalyst, thereby maintaining relatively high catalyst activity.

In one embodiment, a fluid dispersing device is provided at the feed stream outlet so as to disperse or atomise the feed stream as the feed stream flows through the feed stream outlet. Providing a fluid dispersing device provides the advantage of dispersing the feed stream in such a way so as to promote contact between the feed stream and the catalyst compared to if the fluid dispersing device were not provided. This will facilitate rapid heating of the material to be hydrotreated. The fluid dispersing device may be a distributor or an atomizer.

The method may further comprise the steps of:
directing the feed stream to contact the catalyst such that the feed stream at least partially reacts in the presence of the catalyst to form a product stream; and
transferring heat from the product stream to the feed stream.

In one embodiment, a hydrogen stream is used to transfer heat from the product stream to the feed stream. The hydrogen stream can be directed such that at least a portion of the hydrogen stream obtains heat from a heat exchanger through which the product stream flows. Heat obtained by the hydrogen stream can then be transferred to the feed stream. In one embodiment, the heat obtained by the hydrogen stream is transferred to the feed stream by mixing the hydrogen stream with the feed stream. The hydrogen stream may also be used in the reaction in the presence of the catalyst, such as by directing the hydrogen towards a region in which the catalyst is located.

If the feed stream comprises water, transferring heat from the product stream to the feed can facilitate evaporating at least a portion of the water of the feed stream.

The heat exchanger may be a heat exchange coil or other appropriate heat exchange design familiar to those skilled in the field.

In one example, the feed stream passes through a first region to react in a second region, and the resulting product stream is directed to the first region where heat is transferred from the product stream to the feed stream. In one example, the first and second regions are internal to a reactor. In an alternative example, at least a portion of the first region is external to the reactor, and the second region is internal to the reactor. In one example, the product stream is directed to the first region via the second region.

The material is bio-crude from biomass pyrolysis. The green bio-crude is obtained from the pyrolysis of biomass using a variety of ways known to those skilled in the field.

It will be appreciated that the hydrogen may be provided as a gas stream containing hydrogen. One such example is the synthesis gas (mainly CO and H₂) from the gasification/reforming of a solid or liquid fuel.

A variety of hydrotreatment catalysts, known now or in the future, may be used. In one embodiment, the catalyst is a nickel-based catalyst or a cobalt-based catalyst. In one particular example, the catalyst is a NiMo catalyst pre-sulphided or sulphided in situ. In another example, the catalyst is a CoMo catalyst pre-sulphided or sulphided in situ. In another embodiment, the catalyst (or catalyst mixture) contains catalytic species that can catalyse the *in situ* formation of activated hydrogen from the feed material and/or hydrogenation agent including a hydrogen-containing gas stream. It will be advantageous if the catalytic species can catalyse the formation of activated hydrogen at low temperature. One such example is the catalytic species that can catalyse the water-gas-shift reaction (CO + H₂O = H₂ + CO₂) in the forward and/or backward directions.

In accordance with the present invention, there is provided a method of hydrotreatment, the method further comprising the steps of:
directing a feed stream to contact a catalyst such that the feed stream at least partially reacts in the presence of the catalyst to form a product stream, the feed stream comprising a material that is suitable for undergoing hydrotreatment and a hydrogenation agent; and
transferring heat from the product stream to the feed stream.

The hydrogenation agent may be hydrogen or a hydrogen-containing reactant.

Transferring heat from the product stream to the feed stream will increase an energy efficiency of the method compared to if the heat transfer did not occur. If the feed stream comprises water, transferring heat from the product stream to the feed can facilitate evaporating at least a portion of the water of the feed stream.

Further, transferring heat from the product stream to the feed stream can facilitate quenching the product stream, thereby minimising decomposition of the product stream.

The feed stream may pass through a first region to a second region in which the catalyst is located, the second region being at at least a temperature at which the catalyst has significant activity.

In one embodiment, a hydrogen stream is used to transfer heat from the product stream to the feed stream. It will be appreciated that the hydrogen stream that is used to transfer heat from the product stream to the feed stream may be a stream of hydrogen that is different from the hydrogen of the feed stream. The hydrogen stream can be directed such that at least a portion of the hydrogen stream obtains heat from a heat exchanger through which the product stream flows. Heat obtained by the hydrogen stream can then be transferred to the feed stream. In one embodiment, the heat obtained by the hydrogen stream is transferred to the feed stream by mixing the hydrogen stream with the feed stream. The hydrogen stream may also be used in the reaction in the presence of the catalyst, such as by directing the hydrogen to the second region.
The heat exchanger may be a heat exchange coil or other appropriate heat exchange design familiar to those skilled in the field.

In one example, the feed stream passes through the first region to react in the second region, and the resulting product stream is directed to the first region where heat is transferred from the product stream to the feed stream. In one example, the first and second regions are internal to a reactor. In an alternative example, at least a portion of the first region is external to the reactor, and the second region is internal to the reactor. In one example, the product stream is directed to the first region from or via the second region.

The method comprises the step of heating the feed stream to break chemical bonds of the material in the presence of a catalyst, the feed stream being heated to at least a temperature at which the catalyst can provide activated hydrogen to react with the broken bonds within the material so as to minimise coke formed from the material.

The feed stream is heated upon contact with the catalyst, the catalyst having been heated to at least the temperature at which the catalyst has significant activity.

The method comprises the step of, prior to heating the feed stream in the presence of the catalyst, maintaining the feed stream below a predefined temperature at which an amount of coke formed from the material would substantially reduce activity of the catalyst.

The predefined temperature depends on the material to be hydrotreated; this is below 150°C for bio-crude (e.g. bio-oil) to be hydrotreated.

In one embodiment, the feed stream is maintained below the predefined temperature by mixing the hydrogen with the material such that the feed stream has a linear velocity sufficient to reduce a residence time of the material in a first region prior to contacting the catalyst in a second region.

According to the present invention, the feed stream is maintained below the predefined temperature by directing the feed stream directly into the second region. In one embodiment, the feed stream is directed through a passage that is provided with a feed stream outlet from which the feed stream can flow, the feed stream outlet being arranged at or adjacent the second region such that at least a portion of the feed stream flowing from the feed stream outlet flows directly into the second region.

In one embodiment, a fluid dispersing device is provided at the feed stream outlet so as to disperse or atomise the feed stream as the feed stream flows through the feed stream outlet. The fluid dispersing device may be a distributor or an atomizer.

The material is bio-crude from biomass pyrolysis. The green bio-crude is obtained from the pyrolysis of biomass using a variety of ways known to those skilled in the field.

It will be appreciated that the hydrogen may be provided as a gas stream containing hydrogen. One such example is the synthesis gas (mainly CO and H₂) from the gasification/reforming of a solid or liquid fuel.

A variety of hydrotreatment catalysts, known now or in the future, may be used. In one embodiment, the catalyst is a nickel-based catalyst or a cobalt-based catalyst. In one particular example, the catalyst is a NiMo catalyst pre-sulphided or sulphided in situ. In another example, the catalyst is a CoMo catalyst pre-sulphided or sulphided in situ. In another embodiment, the catalyst (or catalyst mixture) contains catalytic species that can catalyse the *in situ* formation of activated hydrogen from the feed material and/or hydrogenation agent including a hydrogen-containing gas stream. It will be advantageous if the catalytic species can catalyse the formation of activated hydrogen at low temperature. One such example is the catalytic species that can catalyse the water-gas-shift reaction (CO + H₂O = H₂ + CO₂) in the forward and/or backward directions.

In accordance with the present disclosure, there is described a hydrotreatment system comprising:
a reaction region in which a catalyst is located;
a first input for providing a material that is suitable for undergoing hydrotreatment;
a second input for providing a hydrogenation agent stream for forming a feed stream when mixed with the material, the feed stream comprising a mixture of the material and the hydrogenation agent;
a feed stream passage arranged to receive the material and the hydrogen stream, the feed stream passage further being arranged to direct the resulting feed stream to the reaction region in which the catalyst is located;
a heat source for providing heat to the reaction region so as to heat the feed stream to break chemical bonds of the material in the presence of the catalyst, the feed stream being heated to at least a temperature at which the catalyst can provide activated hydrogen to react with the broken bonds within the material so as to minimise coke formed from the material; and
an outlet stream passage for products and any unreacted components of the feed stream to exit the hydrotreatment system.

In one example, the hydrogenation agent is hydrogen or a hydrogen-containing reactant.

It will be appreciated that the heat source may be provided by exothermic reactions that occur during hydrotreatment of the material.

In accordance with the present disclosure, there is described a hydrotreatment system comprising:
a reaction region in which a catalyst is located;
a feed stream passage arranged to direct a feed stream to contact the catalyst located in the reaction region such that the feed stream at least partially reacts in the presence of the catalyst to form a product stream, the feed stream comprising a material that is suitable for undergoing hydrotreatment and a hydrogenation agent;
a heat exchanger arranged to receive the product stream and to transfer heat from the product stream to the feed stream; and
an outlet stream passage for products and any unreacted components of the feed stream to exit the hydrotreatment system.

The hydrogenation agent may be hydrogen or a hydrogen-containing reactant.

The material of the system of the present disclosure is bio-crude from biomass pyrolysis. The material of the system may be a biological material, a pharmaceutical material, or any material that can be hydrotreated but that can undergo undesirable reactions in the absence of activated hydrogen provided by a catalyst. The green bio-crude may be obtained from the pyrolysis or hydrothermal treatment or liquefaction of biomass using a variety of ways known to those skilled in the field.

A variety of hydrotreatment catalysts, known now or in the future, may be used. In one embodiment, the catalyst is a nickel-based catalyst or a cobalt-based catalyst. In one particular example, the catalyst is a NiMo catalyst pre-sulphided or sulphided in situ. In another example, the catalyst is a CoMo catalyst pre-sulphided or sulphided in situ. In another embodiment, the catalyst (or catalyst mixture) contains catalytic species that can catalyse the *in situ* formation of activated hydrogen from the feed material and/or hydrogenation agent including a hydrogen-containing gas stream. It will be advantageous if the catalytic species can catalyse the formation of activated hydrogen at low temperature. One such example is the catalytic species that can catalyse the water-gas-shift reaction (CO + H₂O = H₂ + CO₂) in the forward and/or backward directions.

It will be appreciated that the hydrogen may be provided as a gas stream containing hydrogen. One such example is the synthesis gas (mainly CO and H₂) from the gasification/reforming of a solid or liquid fuel.

The system of the third or fourth aspects may be a standalone system, or the system may be a component of a further system, such as a petro-refinery system.

### Brief Description of the Figures

Figure 1 is a flow diagram of a method of hydrotreatment not falling under the scope of the claims.
Figure 2 is a schematic diagram of a hydrotreatment system.

### Detailed Description

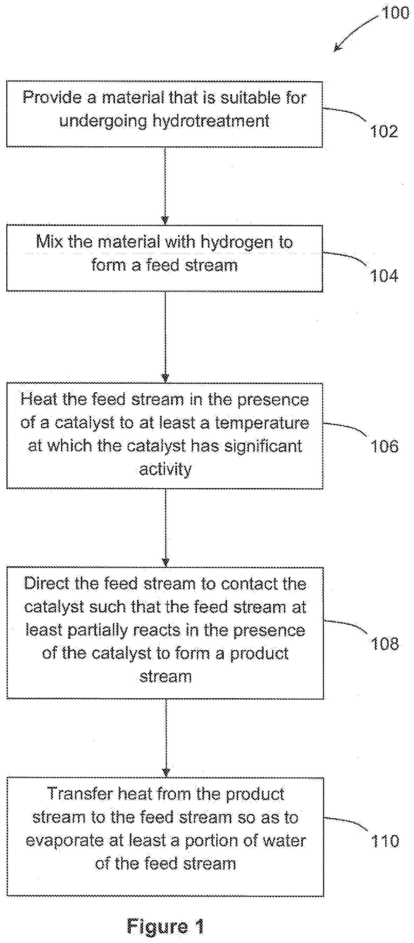

Figure 1 shows a method 100 of hydrotreatment. The method 100 is generally directed to reacting a material that is suitable for undergoing hydrotreatment with hydrogen in the presence of a catalyst. In the following description, the material is bio-crude from biomass pyrolysis, although it will be appreciated that the material may, for example, be green crude obtained from treating biomass in water, a biological material, a pharmaceutical material, or any material that can be hydrotreated but that can undergo undesirable reactions in the absence of activated hydrogen provided by a catalyst.

The method 100 particularly involves feeding a mixture of the material and hydrogen (also referred to as a feed stream) directly into a reaction region of a reactor, wherein the reaction region is at a temperature sufficient for the reaction between the material and the hydrogen to occur in the presence of a hydrotreating catalyst.

Feeding the mixture of the material and hydrogen rapidly and directly into the reaction region facilitates matching bond-breaking within the material with active hydrogen provided by the hydrotreating catalyst. This can prevent the material from forming coke on the catalyst (including its internal surface), which in turn prevents an activity level of the catalyst from being reduced.

In contrast, conventional hydrotreatment methods typically comprise heating the material to a level at which coke may form prior to the material having access to the activated hydrogen.

After the material has reacted with the hydrogen in the presence of the catalyst, a resulting product stream, which is at a relatively high temperature after passing through the reaction region, is directed to a heat exchanger. The heat exchanger facilitates removing heat from the product stream, such as by condensing the product stream, and transfers heat removed from the product stream to the feed stream.

Removing heat from the product stream can facilitate reducing the temperature of the product stream, thereby preventing products formed from the hydrotreatment process undergoing any further undesirable thermal reactions that may degrade the quality of the products. In a conventional hydrotreatment system, heat may be removed from the product stream from inside the reactor to a region external to the reactor. Given that the reactor may be a high pressure reactor having a relatively thick wall, heat transfer across the wall may be slower than desired and may be a rate-limiting step.

Transferring heat from the product stream to the feed stream as per the method 100 facilitate the relatively rapid removal of heat from the product stream.

Transferring heat to the feed stream can also facilitate increasing the energy efficiency of the method of hydrotreatment 100. For example, if the material has a relatively high concentration of water, then under hydrotreatment conditions the water is likely to be in the gaseous state as the temperature may be a relatively high temperature at which the catalyst can provide activated hydrogen, such as 375°C or higher. Therefore, in heating up the material to this temperature, the water contained in the material will evaporate, requiring a large amount of energy. In some cases, the latent heat of evaporation for water (approximately 2258 kJ/kg) can be greater than the sensible heat (approximately 4.18 kJ/kg °C) required to heat the water to the reaction temperature. As mentioned above, the reactor will typically have a relatively thick wall, and therefore supplying energy across the reactor wall to heat up the feed bio-crude and evaporate its water may become a rate-limiting step.

In the embodiment of the method 100, heat transferred from the product stream to the feed stream can facilitate evaporating water of the material, and in heating the feed stream close to the reaction temperature generally. This reduces an amount of heat that is required to be supplied from a heat source, such as a heat source external to the reactor.

Specific steps of the method 100 will now be described. In the example illustrated in Figure 1, the method 100 comprises a first step 102 of providing a material that is suitable for undergoing hydrotreatment. As mentioned, the material in this example is bio-crude, although it will be appreciated that the material may be any material that is desired to undergo hydrotreatment.

In a second step 104, the material is mixed with hydrogen to form a feed stream. The feed stream is then, in a third step 106, heated in the presence of a catalyst to at least a temperature at which the catalyst has significant activity.

The feed stream is directed in a fourth step 108 to contact the catalyst such that the material and hydrogen of the feed stream at least partially react in the presence of the catalyst to form a product stream.

It will be appreciated that steps 106 and 108 may be combined into one step.

In a fifth step 110, heat is transferred from the product stream to the feed stream so as to evaporate at least a portion of water of the feed stream and also to heat up the feed stream.

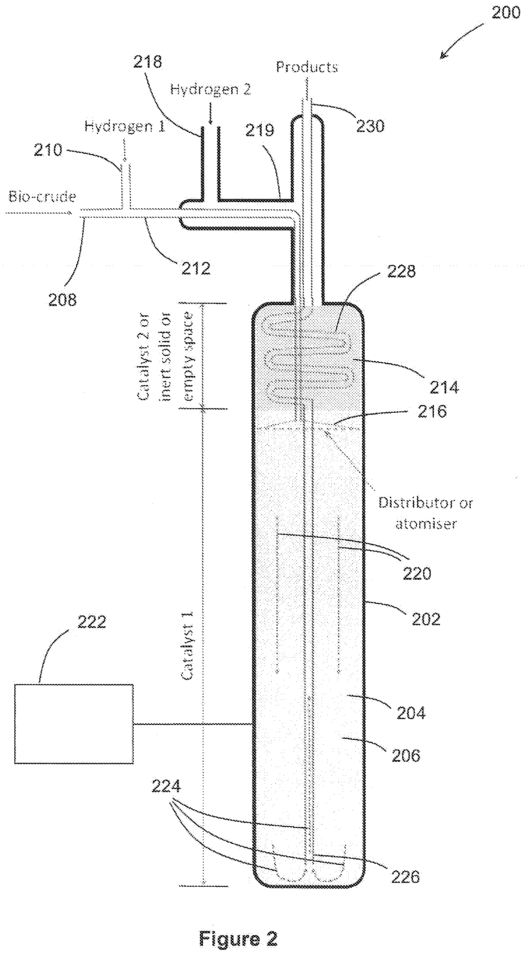

An example hydrotreatment system 200 that is arranged to conduct the method of hydrotreatment 100 is illustrated in Figure 2 and will now be described.

The hydrotreatment system 200 comprises a reactor 202 in which a material that is suitable for undergoing hydrotreatment reacts with hydrogen (or hydrogen-containing reactants such as a mixture containing mainly CO and H₂) in the presence of a catalyst. As mentioned, in this example the material is bio-crude.

A catalyst 204 is located within a reaction region 206 of the reactor 202. In this example the catalyst 204 is a pre-sulphided NiMo catalyst, although it will be appreciated that the catalyst 204 may be any appropriate catalyst (or a catalyst mixture) for the reaction between the bio-crude and the hydrogen. For example, the catalyst may be a nickel-based catalyst or a cobalt-based catalyst. In one particular example, the catalyst is a NiMo catalyst pre-sulphided or sulphided in situ. In another example, the catalyst is a CoMo catalyst pre-sulphided or sulphided in situ. Mixed catalysts may also be used. In another example, the catalyst (or catalyst mixture) contains catalytic species that can catalyse the *in situ* formation of activated hydrogen from the feed material and/or hydrogenation agent including a hydrogen-containing gas stream. It will be advantageous if the catalytic species can catalyse the formation of activated hydrogen at low temperature. One such example is the catalytic species that can catalyse the water-gas-shift reaction (CO + H₂O = H₂ + CO₂) in the forward and/or backward directions.

In this example, the bio-crude is input, corresponding to step 102 of the method 100, into the hydrotreatment system 200 via a first input 208. The hydrogen is input as a first hydrogen stream via a second input 210.

The bio-crude and the first hydrogen stream are mixed (step 104) to form a feed stream as they enter a feed stream passage 212. The feed stream passage 212 functions to direct the feed stream through a heat exchange region 214 of the reactor 202 to be dispersed through an outlet 216. A further catalyst may be arranged in the heat exchange region 214. Alternatively, the heat exchange region 214 may be at least partially filled with an inert solid or may be empty apart from other functional components of the system 200.

The outlet 216 is a fluid dispersing device arranged to disperse or atomise the feed stream as the feed stream flows through the outlet 216 and may be a distributor or an atomizer. The outlet 216 disperses the feed stream into the reaction region 206 of the reactor 202.

A second stream of hydrogen is input to the hydrotreatment system 200 via a third input 218. The second stream of hydrogen is then directed via a hydrogen stream passage 219 through the heat exchange region 214 to the reaction region 206 of the reactor 202. The second stream of hydrogen functions, amongst other things, to transfer heat (step 110) from a product stream produced by the hydrotreatment system 200 to the feed stream. This process will be described in more detail later.

The second stream of hydrogen mixes with the feed stream in the reaction region 206 of the reactor 202, and provides additional hydrogen for hydrogenation so as to react with the bio-crude in the method of hydrotreatment 100.

The feed stream, the general direction of flow of which is indicated by arrows 220, is heated (step 106) to at least a temperature at which the catalyst 204 has significant activity. In this example, the heat is provided by a heat source 222 arranged to supply heat to the reaction region 206. The feed stream may be heated indirectly by the heat source 222 when the feed stream comes into contact with the catalyst 204.

The feed stream is directed (step 108) to contact the catalyst 204 such that the bio-crude and the hydrogen of the feed stream react in the presence of the catalyst 204 to form a product stream.

Upon contacting the catalyst 204, which in this example is at an elevated temperature, the bio-crude and hydrogen are heated up rapidly to the reaction temperature. The fluid of bio-crude and hydrogen mixture will then flow along a length of the reactor 202 while the bio-crude is continuously hydrotreated to form the product stream.
The product stream, a direction of which is indicated by arrows 224, is directed into a product stream passage (or a bank of passages) 226 that is of a relatively small diameter. The product stream passage 226 directs the product stream to a heat exchange coil 228. The heat exchange coil 228 is located in the heat exchange region 214 and is arranged to facilitate condensing the product stream to a liquid, thereby removing heat from the product stream. Taking the reaction product stream through the relatively small diameter product stream passage 226 and heat exchange coil 228 directly from the hot reaction region 206 and quenching the product stream rapidly facilitates preventing thermal decomposition of the hydrotreated products, which would tend to degrade the quality of the products.

The heat is transferred (step 110) to the second hydrogen stream as the second hydrogen stream flows through the heat exchange region 214. The second hydrogen stream is then able to transfer heat obtained from the heat exchange coil 228 to the feed stream, for example when the second hydrogen stream mixes with the feed stream.

The second hydrogen stream provides a number of functions in the method of hydrotreatment 100. As the second hydrogen stream flows through the hydrogen stream passage 219, the second hydrogen stream will flow around an outside of the feed stream passage 212 carrying the bio-crude - hydrogen mixture. This can facilitate preventing the feed stream mixture from being heated to an elevated temperature before the feed stream mixture comes into contact with the catalyst 204. Otherwise, excess coke formation could result.

Further, and as mentioned, the second hydrogen stream will flow around the heat exchange coil 228. With its high heat conductivity, the second hydrogen stream will effectively cool down the hydrotreated product stream flowing inside the heat exchange coil 228, and transfer heat from the product stream to the reaction region 206 inside the reactor 202 where the bio-crude and hydrogen mixture contact the catalyst 204. This is the region of high heat demand where the bio-crude is heated up and the bio-crude's water is evaporated.

The second hydrogen stream will also mix with the feed stream of bio-crude and hydrogen to become part of hydrogen required by the hydrotreating reactions.

The now condensed and cooled product stream then flows from the hydrotreatment system 200 via a product stream outlet 230 and the product stream can be processed further or used as a bio-fuel.

As described above, the method 100 and the system 200 provide the advantages of reducing coke formation and increasing the energy efficiency of hydrotreatment process.

With respect to minimising coke formation, experiments using some features of the system 200 illustrated in Figure 2 have been carried out for the hydrotreatment of bio-crude at various scales in the laboratory.

Using a pre-sulphided NiMo catalyst, the system 200 has been shown to effectively minimise the coke formation on the catalyst surface by matching the bond-breaking with the supply of active hydrogen.

Firstly, the system 200 can effectively prevent the bio-crude from being heated up to elevated temperatures before it comes into contact with the catalyst 204 that can supply active hydrogen. As is shown in Figure 2, the bio-crude feed is mixed with hydrogen gas at room (or relatively low) temperature. The addition of hydrogen to the bio-crude feed is to increase the linear velocity (and thus to decrease its residence time) of bio-crude inside the feed stream passage 212 to prevent the bio-crude from being heated up to elevated temperatures before coming into contact with the catalyst.
Secondly, the bio-crude will be heated up rapidly only when it is in contact with the catalyst - hydrogen system. This means that free radicals formed from the breakdown of bio-crude molecules will have immediate access to active hydrogen generated at/on the catalyst surface. As was discussed above, this effectively minimises the formation of coke. With this arrangement, the catalyst 204 can be heated and maintained at relatively high temperatures. For example the pre-sulphided NiMo catalyst could be maintained up to 375°C and higher, at which the catalyst is sufficiently active to generate abundant active hydrogen (e.g. hydrogen atoms) to stabilise the radicals, without significant coke formation.

With respect to increasing energy efficiency of the hydrotreatment process, as shown in Figure 2, the hot hydrotreatment product stream will flow through the heat exchange coil 228 to be cooled down before exiting the system 200. The second stream of hydrogen, which is relatively cold, flows outside the heat exchange coil 228. The heat released from the condensation of steam in the product stream and that released from the cooling down of the hot products will be transferred to the catalyst or inert solid or flowing gas in region 214, which will then be transferred to the catalyst 204 in a region of the reactor 202 where relatively cold bio-crude comes in. Through this arrangement of an internal heat exchange system, a substantial fraction of the heat released from the product stream is used to heat up the feed steam as well as to evaporate the water in the feed stream. This represents an effective management of heat supply and demand within the hydrotreatment system 200, thereby increasing its energy efficiency.

The method 100 and system 200 can facilitate overcoming some problems encountered in the hydrotreatment of bio-crude, particularly the aforementioned issues of coke formation on the catalyst's surface and energy efficiency. It is with this method 100 and system 200 that a commercially available sulphided NiMo catalyst can be used to hydrotreat bio-crude to produce liquid "drop-in" biofuels that are miscible with petrol/gasoline and/or diesel. This is advantageous in the field of biorefining, contributing to making liquid biofuels commercially competitive.

In addition to the bio-crude from the pyrolysis of biomass, there are many other thermally instable materials that require thermochemical treatment/processing at elevated temperatures. For example, green crude produced from the treatment of biomass in supercritical/subcritical water could also be hydrotreated using the method 100 and system 200 described herein.

The method 100 and system 200 may also find applications for the thermochemical treatment of biological/pharmaceutical materials or any other heat-sensitive materials, which is prone to form coke or undergo other side reactions in the absence of another reactant such as hydrogen.

Numerous variations and modifications will suggest themselves to persons skilled in the relevant art, in addition to those already described, without departing from the basic inventive concepts. All such variations and modifications are to be considered within the scope of the present invention, the nature of which is to be determined from the claims.

For example, it will also be appreciated that, although the transfer of heat from the product stream to the feed stream has been described as occurring internal to the reactor 202, the system 200 may be arranged such that at least a portion of the heat transfer process occurs external to the reactor. For example, the heat exchange coil 228 may be located external to the reactor 202, and at least a portion of the second hydrogen stream may flow around the heat exchange coil 228 to obtain heat therefrom before being directed into the reaction region 206 where the second hydrogen stream can transfer heat to the feed stream.

In the description of the invention, except where the context requires otherwise due to express language or necessary implication, the words "comprise" or variations such as "comprises" or "comprising" are used in an inclusive sense, i.e. to specify the presence of the stated features, but not to preclude the presence or addition of further features in various embodiments of the invention.

## Claims

1. A method of hydrotreatment, the method comprising the steps of:
providing bio-crude from biomass pyrolysis that is suitable for undergoing hydrotreatment;
mixing the bio-crude with a hydrogenation agent to form a feed stream comprising a mixture of the bio-crude and the hydrogenation agent; and
heating the feed stream to break chemical bonds of the bio-crude in the presence of a hydrotreating catalyst, the feed stream being heated to at least a temperature at which the hydrotreating catalyst can provide activated hydrogen to react with the broken bonds within the bio-crude so as to minimise coke formed from the bio-crude,
**characterised in that**
the feed stream is fed directly into a reaction region of a reactor, wherein the reaction region is at a temperature sufficient for the reaction between the bio-crude and the hydrogenation agent to occur in the presence of the hydrotreating catalyst to facilitate matching bond-breaking within the bio-crude with activated hydrogen provided by the hydrotreating catalyst; and
prior to heating the feed stream in the presence of the hydrotreating catalyst, the feed stream is maintained below a predefined temperature, wherein the predefined temperature is 150°C.

2. The method of claim 1, wherein the hydrogenation agent is hydrogen or a hydrogen-containing reactant.

3. The method of claim 1 or 2 further comprising the steps of:
directing the feed stream to contact the hydrotreating catalyst such that the feed stream at least partially reacts in the presence of the hydrotreating catalyst to form a product stream; and
transferring heat from the product stream to the feed stream.

4. The method of claim 3, wherein a hydrogen stream is used to transfer heat from the product stream to the feed stream.

## Patentansprüche

1. Verfahren zur Hydrobehandlung, wobei das Verfahren die folgenden Schritte umfasst:
Bereitstellung von Bio-Rohstoff aus der Biomasse-Pyrolyse, der sich für eine Hydrobehandlung eignet;
Mischen des Bio-Rohstoffs mit einem Hydrierungsmittel zur Bildung eines Zufuhrstroms, der eine Mischung aus dem Bio-Rohstoff und dem Hydrierungsmittel umfasst; und
Erhitzen des Zufuhrstroms, um chemische Bindungen des Bio-Rohstoffs in Gegenwart eines Hydrobehandlungskatalysators aufzubrechen, wobei der Zufuhrstrom auf mindestens eine Temperatur erhitzt wird, bei der der Hydrobehandlungskatalysator aktivierten Wasserstoff liefern kann, um mit den aufgebrochenen Bindungen innerhalb des Bio-Rohstoffs zu reagieren, sodass der aus dem Bio-Rohstoff gebildete Koks minimiert wird,
**dadurch gekennzeichnet, dass**
der Zufuhrstrom direkt in einen Reaktionsbereich eines Reaktors eingespeist wird, wobei der Reaktionsbereich eine Temperatur aufweist, die für die Reaktion zwischen dem Bio-Rohstoff und dem Hydrierungsmittel in Gegenwart des Hydrobehandlungskatalysators ausreicht, um das Bindungsbrechen innerhalb des Bio-Rohstoffs mit dem vom Hydrobehandlungskatalysator bereitgestellten aktivierten Wasserstoff zu erleichtern; und
vor dem Erhitzen des Zufuhrstroms in Gegenwart des Hydrobehandlungskatalysators wird der Zufuhrstrom unter einer vordefinierten Temperatur gehalten, wobei die vordefinierte Temperatur 150°C beträgt.

2. Verfahren nach Anspruch 1, wobei das Hydrierungsmittel Wasserstoff oder ein wasserstoffhaltiger Reaktant ist.

3. Verfahren nach Anspruch 1 oder 2, das ferner die folgenden Schritte umfasst:
Lenken des Zufuhrstroms zum Kontakt mit dem Hydrobehandlungskatalysator, sodass der Zufuhrstrom zumindest teilweise in Gegenwart des Hydrobehandlungskatalysators reagiert, um einen Produktstrom zu bilden; und
Übertragung von Wärme vom Produktstrom auf den Zufuhrstrom.

4. Verfahren nach Anspruch 3, wobei ein Wasserstoffstrom verwendet wird, um Wärme vom Produktstrom auf den Zufuhrstrom zu übertragen.

## Revendications

1. Procédé d'hydrotraitement, le procédé comprenant les étapes suivantes :
obtention de bio-brut à partir de la pyrolyse d'une biomasse, qui est adapté pour subir un hydrotraitement ;
mélange du bio-brut avec un agent d'hydrogénation pour former un courant d'alimentation comprenant un mélange du bio-brut et de l'agent d'hydrogénation ; et
chauffage du courant d'alimentation pour rompre les liaisons chimiques du bio-brut en présence d'un catalyseur d'hydrotraitement, le courant d'alimentation étant chauffé au moins à une température à laquelle le catalyseur d'hydrotraitement peut fournir de l'hydrogène activé pour une réaction avec les liaisons rompues dans le bio-brut de façon que la formation de coke à partir du bio-brut soit minimisée,
**caractérisé en ce que**
le courant d'alimentation est introduit directement dans une région de réaction d'un réacteur, dans lequel la région de réaction est à une température suffisante pour que la réaction entre le bio-brut et l'agent d'hydrogénation ait lieu en présence du catalyseur d'hydrotraitement pour faciliter la correspondance de la rupture des liaisons dans le bio-brut avec l'hydrogène activé fourni par le catalyseur d'hydrotraitement ; et
avant le chauffage du courant d'alimentation en présence du catalyseur d'hydrogénation, le courant d'alimentation est maintenu sous une température prédéfinie, dans lequel la température prédéfinie est de 150 °C.

2. Procédé selon la revendication 1, dans lequel l'agent d'hydrogénation est l'hydrogène ou un réactif contenant de l'hydrogène.

3. Procédé selon la revendication 1 ou 2, comprenant en outre les étapes suivantes :
direction du courant d'alimentation pour qu'il vienne au contact du catalyseur d'hydrotraitement de façon que le courant d'alimentation réagisse au moins partiellement en présence du catalyseur d'hydrotraitement pour former un courant de produit ; et
transfert de chaleur depuis le courant de produit vers le courant d'alimentation.

4. Procédé selon la revendication 3, dans lequel un courant d'hydrogène est utilisé pour transférer la chaleur depuis le courant de produit vers le courant d'alimentation.
